# EUROPEAN PATENT APPLICATION

(11) **EP 4 752 734 A1**
(43) Date of publication of application: **03.06.2026**
(21) Application number: 25204950.7
(22) Date of filing: 26.09.2025
(51) Int. Cl.: G06F 12/02, G06F 12/06

(54) **METHOD AND ELECTRONIC DEVICE WITH MEMORY MANAGEMENT**

(30) Priority: 29.11.2024 KR 20240175922
(71) Applicant: Samsung Electronics Co., Ltd., Suwon-si, Gyeonggi-do 16677 (KR)
(72) Inventor: Myung, Rohyoung, 16678 Suwon-si, Gyeonggi-do (KR); Jo, Jae-Eon, 16678 Suwon-si, Gyeonggi-do (KR)
(74) Representative: Grünecker Patent- und Rechtsanwälte PartG mbB

(57) **Abstract**

A processor-implemented method includes determining whether a page usage of a first sub-memory region of a first memory node among a plurality of memory nodes of a memory is greater than or equal to a first threshold value, determining a second sub-memory region of the first memory node in response to the page usage of the first sub-memory region being greater than or equal to the first threshold value, determining a target page among pages of the determined second sub-memory region, and allocating the determined target page of the second sub-memory region to the first sub-memory region.

## Description

### BACKGROUND

### 1. Field

The following description relates to a method and electronic device with memory management.

### 2. Description of Related Art

In a typical system on chip (SoC) architecture with a manycore type, a mapping method between a physical address and a memory node of a memory (or an address space partitioning method) may be programmable, but the mapping method used may be fixed after the SoC is booted. When the typical mapping relationship between the physical address and the memory node of the memory is set at the time of SoC booting, the mapping relationship may not be dynamically modified during the SoC operation, which may cause a problem in which only the memory of a specific memory node is excessively used. In addition, some applications may use memory nodes that do not meet the characteristics required by the applications due to the above mapping relationship, which may hinder the achievement of desired performance of the applications.

### SUMMARY

The invention is claimed in the independent claims. Preferred embodiments are specified in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method includes determining whether a page usage of a first sub-memory region of a first memory node among a plurality of memory nodes of a memory is greater than or equal to a first threshold value, determining a second sub-memory region of the first memory node in response to the page usage of the first sub-memory region being greater than or equal to the first threshold value, determining a target page among pages of the determined second sub-memory region, and allocating the determined target page of the second sub-memory region to the first sub-memory region.

The determining of the second sub-memory region of the first memory node in response to the page usage of the first sub-memory region being greater than or equal to the first threshold value may include determining the second sub-memory region based on page usages of a plurality of sub-memory regions of the first memory node.

The allocating of the target page of the second sub-memory region to the first sub-memory region may include associating a target physical address of the target page with a first sub-region identifier corresponding to the first sub-memory region.

The allocating of the target page of the second sub-memory region to the first sub-memory region may include changing a value of a first field indicating that a sub-memory region allocated to the target page within a bit field for the target physical address of the target page is changed to a preset value, and changing a value of a second field indicating a sub-memory region to be reallocated within the bit field for the target physical address of the target page to a value of the first sub-region identifier.

The bit field for the target physical address of the target page may be generated by either one or both of partitioning the memory and booting the electronic device.

The bit field may include the first field, the second field, a third field indicating an index of the target page, a fourth field indicating an index of a cache line within the target page, and a fifth field for an offset of the bit field.

The third field may include a sub-region identifier field in which a value corresponding to a default sub-memory region allocated to the target page is shown at the time of generating the bit field, and a memory node identifier field for identifying a memory node corresponding to the target page.

In response to a number of the plurality of memory nodes being 2ⁿ, the memory node identifier field may be composed of n bits, and the n may be a natural number.

In response to a number of a plurality of sub-memory regions of the first memory node being 2^{m}, the sub-region identifier field may be composed of m bits, and the m may be a natural number.

The method may include receiving the target physical address from a first application executed by the electronic device, determining whether the value of the first field of the bit field for the target physical address is the preset value in response to the reception of the target physical address, obtaining the value of the second field in response to the value of the first field being the preset value, determining a target hash function based on the value of the second field, obtaining a value corresponding to the first memory node by inputting a value of the memory node identifier field into the target hash function, transmitting the target physical address to the first memory node, receiving target data from the first memory node, and transmitting the target data to the first application.

In one or more general aspects, a non-transitory computer-readable storage medium may store code that, when executed by one or more processors, configures the one or more processors to perform any one, any combination, or all of operations and/or methods disclosed herein.

In one or more general aspects, an electronic device includes a memory comprising a plurality of memory nodes, and one or more processors configured to determine whether a page usage of a first sub-memory region of a first memory node among the plurality of memory nodes is greater than or equal to a first threshold value, determine a second sub-memory region of the first memory node in response to the page usage of the first sub-memory region being greater than or equal to the first threshold value, determine a target page among pages of the second sub-memory region, and allocate the target page of the second sub-memory region to the first sub-memory region.

The one or more processors may include a first core associated with the first memory node, and the first core may be configured to perform the determining of whether the page usage of the first sub-memory region is greater than or equal to the first threshold value, and perform the determining of the second sub-memory region of the first memory node in response to the page usage of the first sub-memory region being greater than or equal to the first threshold value.

For the allocating of the target page, the one or more processors may be configured to associate a target physical address of the target page with a first sub-region identifier corresponding to the first sub-memory region.

For the allocating of the target page, the one or more processors may be configured to change a value of a first field indicating that a sub-memory region allocated to the target page within a bit field for the target physical address of the target page is changed to a preset value, and change a value of a second field indicating a sub-memory region to be reallocated within the bit field for the target physical address of the target page to a value of the first sub-region identifier.

The bit field for the target physical address of the target page may be generated by either one or both partitioning the memory and booting the electronic device.

The bit field may include the first field, the second field, a third field indicating an index of the target page, a fourth field indicating an index of a cache line within the target page, and a fifth field for an offset of the bit field.

The third field may include a sub-region identifier field in which a value corresponding to a default sub-memory region allocated to the target page is shown at the time of generating the bit field, and a memory node identifier field for identifying a memory node corresponding to the target page.

In response to a number of the plurality of memory nodes being 2ⁿ, the memory node identifier field may be composed of n bits, and the n may be a natural number.

In response to a number of a plurality of sub-memory regions of the first memory node being 2^{m}, the sub-region identifier field may be composed of m bits, and the m may be a natural number.

Other features and aspects will be apparent from the following detailed description, the drawings, and the claims.

### BRIEF DESCRIPTION OF THE DRAWINGS

FIG. 1 illustrates an example of a configuration of an electronic device.
FIG. 2 illustrates an example of a configuration of an electronic device.
FIG. 3 illustrates an example of a virtual memory.
FIG. 4A illustrates an example of a method of partitioning a dynamic hashed region.
FIG. 4B illustrates an example of a plurality of partitioned sub-memory regions of a first memory node present within a dynamic hashed region.
FIG. 4C illustrates an example of a partitioned first sub-memory region present within a dynamic hashed region.
FIG. 4D illustrates an example of a partitioned second sub-memory region present within a dynamic hashed region.
FIG. 4E illustrates an example of a partitioned third sub-memory region present within a dynamic hashed region.
FIG. 4F illustrates an example of a partitioned fourth sub-memory region present within a dynamic hashed region.
FIG. 5 illustrates an example of a data transmission method.
FIG. 6 illustrates an example of a memory management method.
FIG. 7 illustrates an example of a method of allocating a target page of a second sub-memory region to a first sub-memory region.
FIG. 8 illustrates an example of a method of transmitting data of a target page allocated to a first sub-memory region to a first application.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" to specify the presence of stated features, numbers, operations, members, elements, and/or combinations thereof, other embodiments may exist where one or more of the stated features, numbers, operations, members, elements, and/or combinations thereof are not present.

Unless otherwise defined, all terms including technical and scientific terms used herein have the same meaning as commonly understood by one of ordinary skill in the art to which this disclosure pertains and based on an understanding of the disclosure of the present application. It will be further understood that terms, such as those defined in commonly-used dictionaries, should be interpreted as having a meaning that is consistent with their meaning in the context of the relevant art and the disclosure of the present application, and will not be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment," and "one or more examples" has a same meaning as "in one or more embodiments").

When describing the examples with reference to the accompanying drawings, like reference numerals refer to like components and a repeated description related thereto will be omitted. In the description of examples, detailed description of well-known related structures or functions will be omitted when it is deemed that such description will cause ambiguous interpretation of the present disclosure.

Although terms such as "first," "second," and "third," or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but is used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on," "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The same name may be used to describe an element included in the examples described above and an element having a common function. Unless otherwise mentioned, the descriptions on the examples may be applicable to the following examples and thus, duplicated descriptions will be omitted for conciseness.

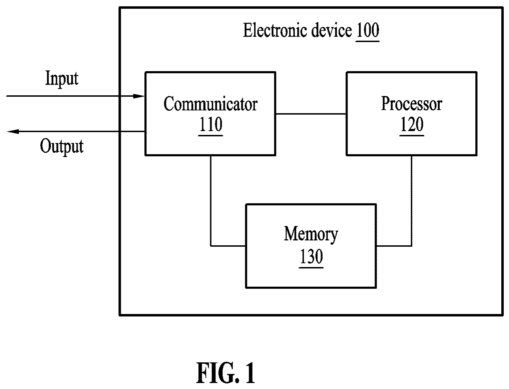

FIG. 1 illustrates an example of a configuration of an electronic device.

An electronic device 100 may include a communicator 110, a processor 120 (e.g., one or more processors), and a memory 130 (e.g., one or more memories).

The communicator 110 may be connected to the processor 120 and the memory 130 and transmit and receive data to and from the processor 120 and the memory 130. The communicator 110 may be connected to another external device and transmit and receive data to and from the external device. The expression used herein "transmitting and/or receiving A" may be construed as transmitting and/or receiving information or data that indicates A.

The communicator 110 may be implemented as circuitry in the electronic device 100. For example, the communicator 110 may include an internal bus and an external bus. **In** another example, the communicator 110 may be an element that connects the electronic device 100 to the external device. The communicator 110 may be an interface. The communicator 110 may receive data from the external device and transmit the data to the processor 120 and the memory 130.

The processor 120 may process the data received by the communicator 110 and data stored in the memory 130. A "processor" may be a hardware-implemented data processing device having a physically structured circuit to execute desired operations. The desired operations may include, for example, codes or instructions included in a program. The hardware-implemented data processing device may include, for example, a microprocessor, a central processing unit (CPU), a processor core, a multi-core processor, a multiprocessor, an application-specific integrated circuit (ASIC), and a field-programmable gate array (FPGA).

The processor 120 may execute computer-readable code (e.g., software) stored in a memory (e.g., the memory 130) and instructions triggered by the processor 120. For example, the memory 130 may be or include a non-transitory computer-readable storage medium storing code that, when executed by the processor 120, configures the processor 120 to perform any one, any combination, or all of operations and/or methods disclosed herein with reference to FIGS. 1-8.

The memory 130 may store the data received by the communicator 110 and the data processed by the processor 120. For example, the memory 130 may store a program (or an application, or software). For example, the program to be stored may be a set of syntaxes that are coded and executable by the processor 120 to manage a memory.

The memory 130 may include, for example, at least one volatile memory, non-volatile memory, random-access memory (RAM), flash memory, a hard disk drive, and an optical disc drive.

The memory 130 may store an instruction set (e.g., software) for operating the electronic device 100. The instruction set for operating the electronic device 100 is executed by the processor 120.

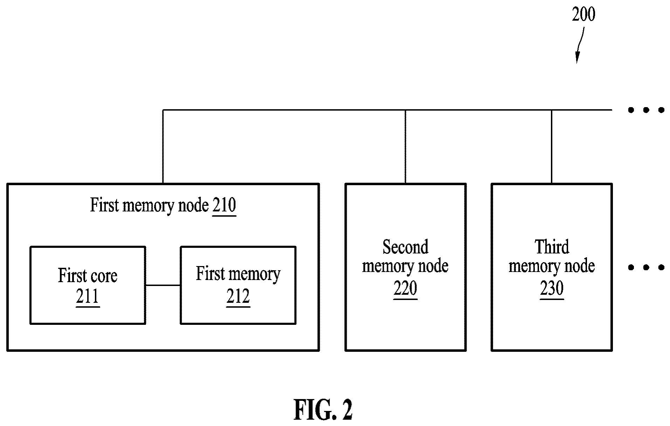

Examples of the communicator 110, the processor 120, and the memory 130 will be described in detail below with reference to FIGS. 2 to 8.

FIG. 2 illustrates an example of a configuration of an electronic device.

According to an example, an electronic device 200 (e.g., the electronic device 100 of FIG. 1) may include a plurality of memory nodes 210, 220, and 230. For example, when a processor (e.g., the processor 120 of FIG. 1) of the electronic device 200 includes a plurality of cores, the plurality of memory nodes 210, 220, and 230 may be node uniform memory access (NUMA) nodes. For example, the electronic device 200 may be a system on chip (SoC) that includes a plurality of cores. For example, the electronic device 200 may be a server that provides a cloud service.

According to an example, a first memory node 210 may include a first memory 212, and a first core 211 (e.g., a first memory controller) may be associated with (e.g., included in) the first memory node 210. For example, the first memory node 210 may include the first core 211 and the first memory 212. The second memory node 220 may include a second memory, and the third memory node 230 may include a third memory. Further, in an example, the second memory node 220 may include a second core, and the third memory node 230 may include a third core. Each of the plurality of memory nodes 210, 220, and 230 may have a memory node identifier (ID). While FIG. 2 illustrates three memory nodes 210, 220, and 230, examples are not limited thereto, and in other examples the electronic device 200 may include two or less memory nodes, or four or more memory nodes.

According to an example, each of the plurality of memory nodes 210, 220, and 230 may have a specific range of physical address ranges. The physical address range may vary depending on a memory structure, SoC architecture, and/or mapping method. For example, the first memory node 210 may have a physical address range of 0x00000000 to 0x3FFFFFFF, and the second memory node 220 may have a physical address range of 0x40000000 to 0x7FFFFFFF. The physical address ranges set in the plurality of memory nodes 210, 220, and 230 may be determined by partitioning or booting of the electronic device 200 (or the memory).

The first core 211 may perform overall functions for controlling the first memory node 210. The first core 211 may be implemented as a CPU, a graphics processing unit (GPU), an application processor (AP), and the like, however, examples are not limited thereto. For example, the first core 211 may not operate only using the first memory 212 of the first memory node 210, but may operate using a memory of another memory node (e.g., the second memory node 220). That is, each of the cores within the electronic device 200 may operate using any or all memories within the electronic device 200.

According to an example, each of the plurality of memory nodes 210, 220, and 230 may correspond to an independent computing device. The plurality of memory nodes 210, 220, and 230 may communicate with each other. For example, the electronic device 200 may be a server system using a cluster system, and each of the plurality of memory nodes 210, 220, and 230 may be a server.

According to an example, the first memory node 210 may further include an accelerator for computation. The accelerator may process tasks that may be more efficiently processed by a separate exclusive processor (that is, the accelerator), rather than by the general-purpose first core 211, due to the characteristics of the tasks. In this case, one or more processing elements (PEs) included in the accelerator may be used. The accelerator may correspond to, for example, a neural processing unit (NPU), a tensor processing unit (TPU), a digital signal processor (DSP), a GPU, and/or a neural engine, which performs an operation according to a neural network. In an example, the first core 211 may include a processor (e.g., a CPU, a GPU, and/or an AP) that performs overall functions for controlling the first memory node 210, and the first core 211 may also include the accelerator (e.g., an NPU, a TPU, a DSP, a GPU, and/or a neural engine) which performs the operation according to the neural network. In another example, the first core 211 may include the processor, and the first memory 212 may include the accelerator.

According to an example, the plurality of memory nodes 210, 220, and 230 may share a virtual memory. For example, the plurality of memory nodes 210, 220, and 230 may share a virtual memory based on a global shared memory (GSM) technology. The plurality of memory nodes 210, 220, and 230 may share a virtual memory so that all cores may use the same address space. The virtual memory may be referred to as a GSM. The plurality of memory nodes 210, 220, and 230 may read and write data from the memory nodes that share the virtual memory. The virtual memory may actually be a memory distributed across each memory node, but an application may be recognized as a local memory. Therefore, the application may access the virtual memory with typical load instructions and store instructions. For example, each memory node may also access data stored in a memory included in another memory node according to memory layers.

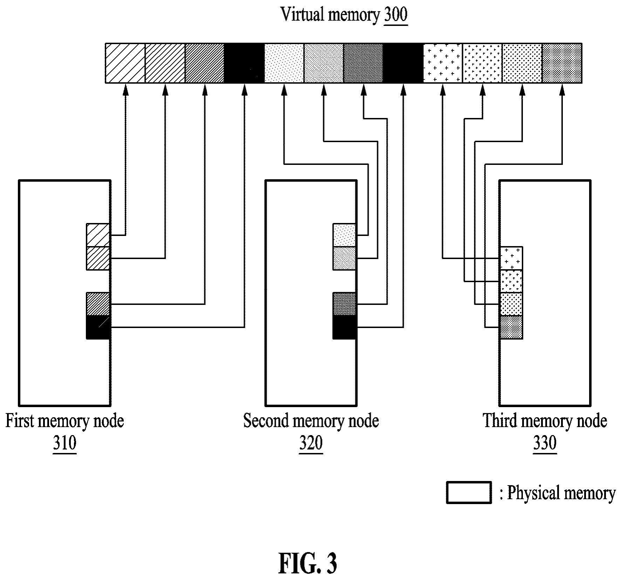

Referring to FIG. 3 below, an example of the virtual memory shared by the plurality of memory nodes will be described.

FIG. 3 illustrates an example of a virtual memory.

According to an example, a plurality of memory nodes 310, 320, and 330 may share a virtual memory 300 (e.g., a GSM).

The virtual memory 300 may represent a virtual memory space shared by the plurality of memory nodes 310, 320, and 330 that share the virtual memory 300. Regions of the virtual memory 300 may correspond to regions physically distributed across the plurality of memory nodes 310, 320, and 330. For example, at least a portion of physical memory regions of the plurality of memory nodes 310, 320, and 330 may be allocated to the virtual memory 300.

For example, when an application executed on a first memory node 310 uses the virtual memory 300, the application may use a memory region allocated to the virtual memory 300 included in the first memory node 310, a memory region allocated to the virtual memory 300 included in another memory node (e.g., the second memory node 320 or the third memory node 330), and a private local memory region of the first memory node 310. A private local memory region may represent a memory region that is not allocated to virtual memory 300, in physical memory regions of a memory node. In an example, a private local memory region may not be present in a memory node.

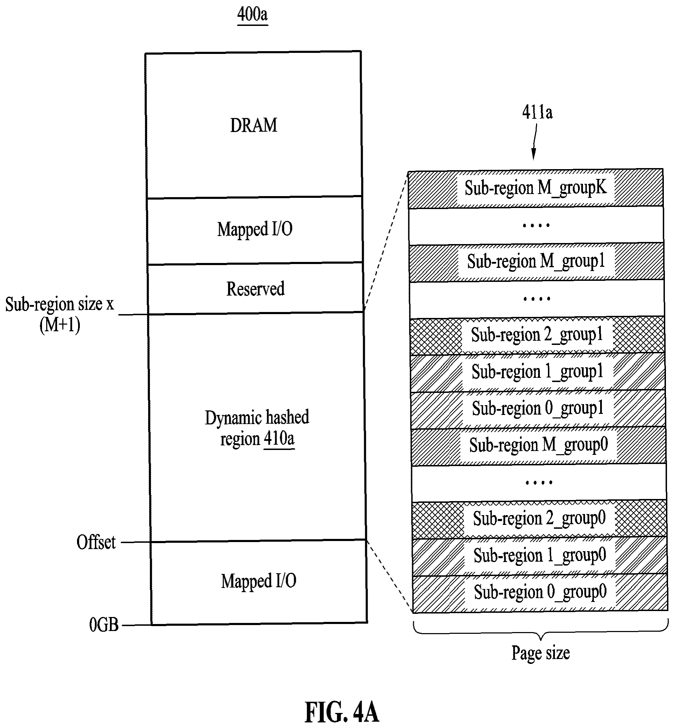

FIG. 4A illustrates an example of a method of partitioning a dynamic hashed region.

According to an example, an address space partitioning (ASP) method may be considered, which processes an access request for a specific physical address as a request to access a specific memory node by mapping a physical address of a memory to a memory node ID. According to the ASP method, different memory nodes may be mapped for each of cache lines that form a page. When the application requests allocation of a memory region, a hypervisor may search for an available page (or frame) and provide the searched page to the application.

When a first application is to be implemented with low latency, the allocated memory region may be a region of a memory positioned physically close to a core on which the first application is executed. For example, when the first application is executed by a core of the first memory node, the memory region allocated to the first application may be a region of a memory (e.g., a first memory) of the first memory node. When the first memory is used by other cores (e.g., for high bandwidth), a partial region of the entire region of the first memory may be allocated for other purposes in advance. When the region of the first memory that may be allocated for the first application becomes insufficient, a method of reallocating a region of the first memory allocated for another purpose for the first application may be performed.

For the above method, a memory region shared by a plurality of cores in a physical address space 400a of a memory of an electronic device (or SoC) may be defined as a dynamic hashed region 410a. For example, according to an example, the dynamic hashed region 410a of the physical address space 400a may correspond to the virtual memory 300 described above with reference to FIG. 3. The conversion between a physical memory and a virtual memory will be understood by one of ordinary skill after an understanding of the present disclosure, and therefore, the description thereof will be omitted below. The electronic device may partition the dynamic hashed region 410a by a preset method. Hereinafter, an example of the preset partitioning method will be described in detail.

The physical address space 400a may be composed of one or more M sub-memory regions having the same size, and each sub-memory region may have a separate policy for connecting a physical address and a memory node ID. For example, each of the M sub-memory regions may have a value of one of 0 to M-1 as a sub-region ID to distinguish the sub-memory regions. Each sub-memory region may include one or more memory node groups. For example, when the sub-region ID for identifying a sub-memory region is 0 (e.g., sub-region 0), each of the memory node groups in the corresponding sub-memory region may include only one memory node. For example, the number of memory nodes associated with (e.g., corresponding to and/or included in) each sub-memory region may be expressed as a power of 2. The above constraints of one or more embodiments may reduce the complexity of a design and logic of mapping. To form a memory node group, a position of a physical memory node may be considered. For example, the memory node group may be preferentially formed between physically adjacent memory nodes.

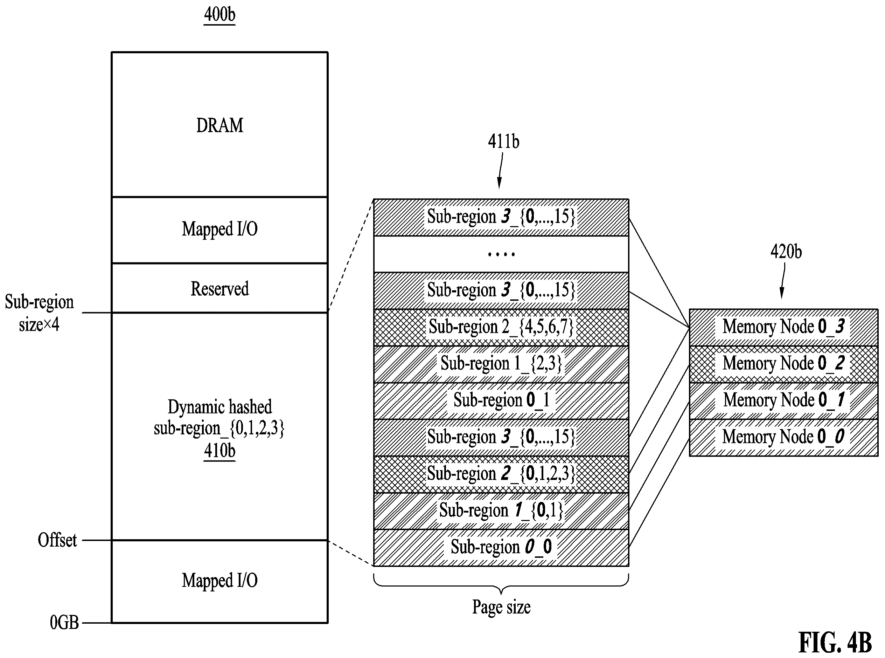

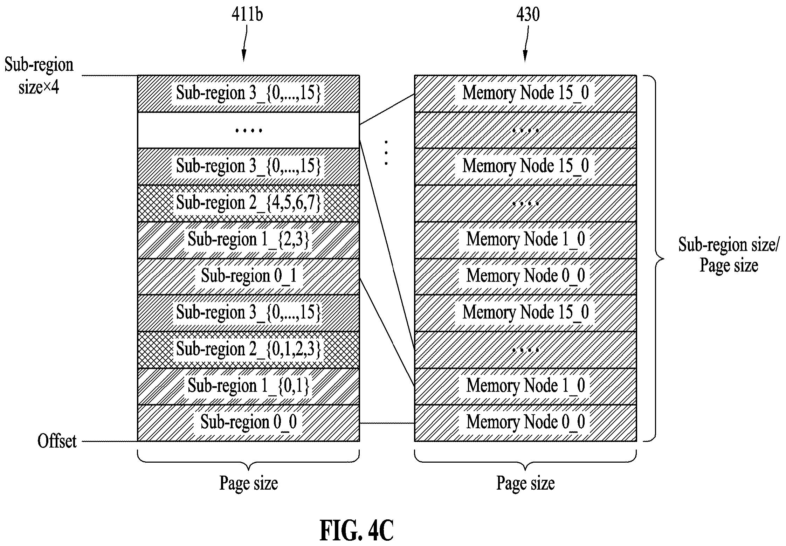

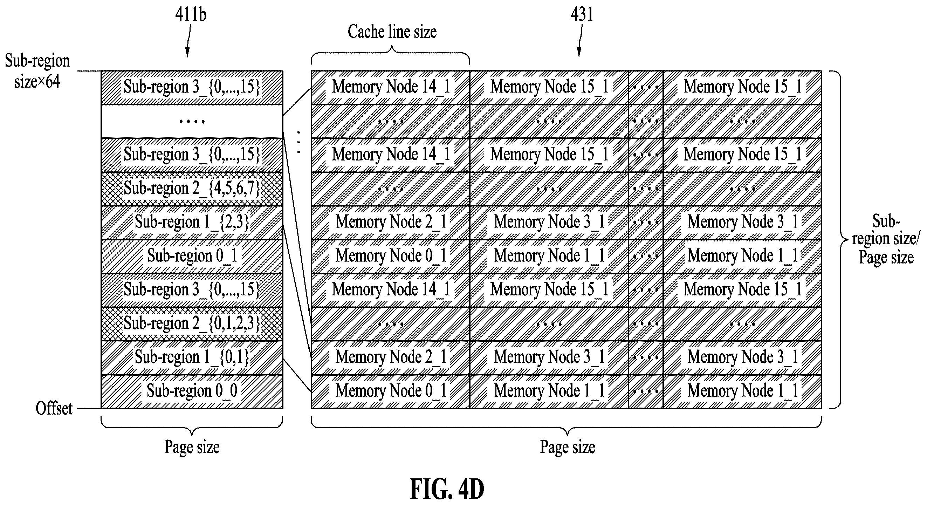

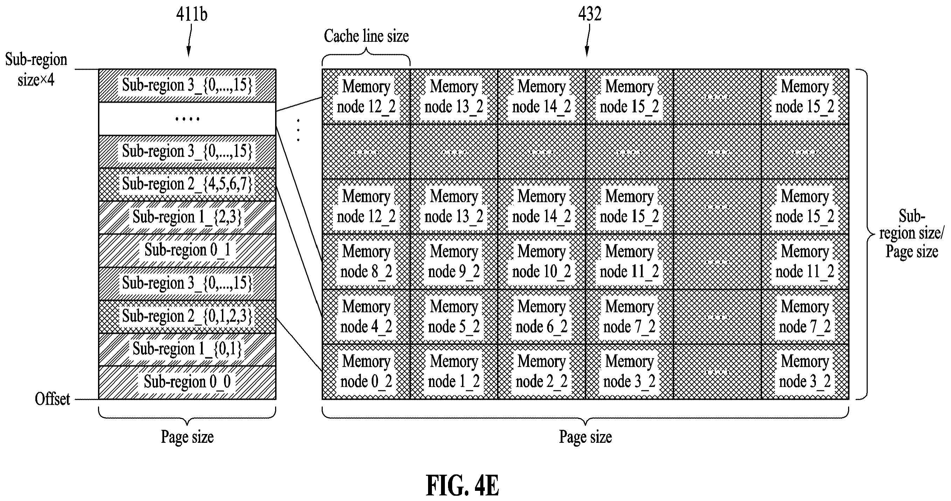

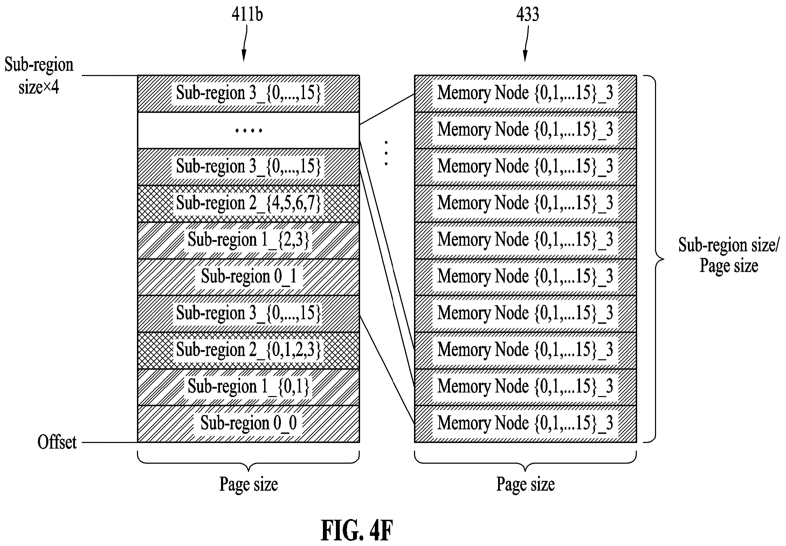

According to an example, the dynamic hashed region 410a may be partitioned as a first array 411a such that different sub-memory regions are interleaved in the unit of pages. In FIG. 4A, a horizontal length of the dynamic hashed region 410a corresponds to a page size, and the page size may correspond to a frame size. An example of the dynamic hashed region 410a partitioned such that different sub-memory regions are interleaved will be described in detail below with reference to FIGS. 4B, 4C, 4D, 4E, and 4F.

FIG. 4B illustrates an example of a plurality of partitioned sub-memory regions of a first memory node present within a dynamic hashed region.

According to an example, when the number of sub-memory regions is 4 and the number of memory nodes is 16, a dynamic hashed region 410b of a physical address space 400b may be partitioned as a first array 411b.

In the first array 411b, Sub-region 0_0 has a sub-region ID of 0 and refers to a group 0. For example, a memory node included in the group 0 may be a memory node 0 (e.g., the first memory node 210). A group (e.g., a node group) may include any number of memory nodes that may be expressed as a power of 2.

In the first array 411b, Sub-region 1_{0, 1} has a sub-region ID of 1 and refers to a group {0, 1}. The group {0, 1} may refer to a group consisting of the memory node 0 and a memory node 1 (e.g., the second memory node 220). For example, the memory nodes in the group {0, 1} may be physically close or adjacent to each other.

In the first array 411b, Sub-region 2_{0, 1, 2, 3} has a sub-region ID of 2 and refers to a group {0, 1, 2, 3}. The group {0, 1, 2, 3} may refer to a group consisting of the memory node 0, the memory node 1, a memory node 2, and a memory node 3. For example, the memory nodes in the group {0, 1, 2, 3} may be positioned in the physically same orientation.

In the first array 411b, Sub-region 3_{0, ..., 15} has a sub-region **ID** of 3 and refers to a group {0, ..., 15}. The group {0, ..., 15} may refer to a group consisting of memory nodes 0 to 15. For example, the memory nodes in the group {0, ..., 15} may be all of memory nodes of an electronic device or SoC.

In the first array 411b, Sub-region 0_1 has a sub-region ID of 0 and refers to a group 1. The group 1 may refer to the memory node 1.

In the first array 411b, Sub-region 1_{2, 3} has a sub-region ID of 1 and refers to a group {2, 3}. The group {2, 3} may refer to a group consisting of the memory node 2 and the memory node 3. For example, the memory nodes in the group {2, 3} may be physically close or adjacent to each other.

In the first array 411b, Sub-region 2_{4, 5, 6, 7} has a sub-region ID of 2 and refers to a group {4, 5, 6, 7}. The group {4, 5, 6, 7} may refer to a group consisting of a memory node 4, a memory node 5, a memory node 6, and a memory node 7. For example, the memory nodes in the group {4, 5, 6, 7} may be positioned in the physically same orientation.

After a page for Sub-region 2_{4, 5, 6, 7}, the page for Sub-region 3_{0, ..., 15} may appear again. In the same manner as above, the pages of the first array 411b may be mapped, and a last page of the first array 411b may be a page for Sub-region 3_{0, ..., 15}.

According to an example, a bit field such as Table 1 below, for example, may be used to generate the first array 411b above.

**Table 1:**

| bit index | | | | | | | | | | | | | | |
|---|---|---|---|---|---|---|---|---|---|---|---|---|---|---|
| 63 | 62 | 61 | ... | 63-m | ... | m+n+11 | ... | m+12 | m+11 | ... | 13 | 12 | 11 to 6 | 6 to 0 |
| Flag | Remapping Sub-region ID | | | | Page index | | | | | | | | Cache line index | Byte offset |
| | | | | | <Memory node ID> | | | | <Sub-region ID> | | | | | |

Table 1 is an example of a bit field that uses 64 bits from a 0th to a 63rd bit as physical addresses. A cache line size may be 64 bytes (B), a page size may be 4 kilobytes (KB), the number of memory nodes may be N, and the number of sub-memory regions may be M. The range of bits for cache lines and pages may be identical to a structure of a bit field for representing physical addresses.

The bit field of Table 1 used to partition the dynamic hashed region 410b using sub-memory regions may define a flag field, a remapping sub-region **ID** field, and a memory node ID field and a sub-region **ID** field within a page index field. An (m + 11)-th bit to a 12th bit of the page index field may be used to identify the sub-region ID. m may satisfy log2(M). For example, the sub-region ID may represent a sub-region ID mapped to a corresponding physical address initially (e.g., at the time of booting or partitioning). After the sub-region ID is identified, a (m + n + 11)-th bit to a (m + 12)-th bit may be used to identify a memory node ID. n = log ₂(N) may be satisfied. For example, the memory node ID may represent an ID of a memory node mapped to a corresponding physical address initially (e.g., at the time of booting or partitioning). A flag field, which is the upper 1 bit of the bit field, may be set to 0 in an initial state where a corresponding physical address has not yet been used for remapping, and may be set to 1 when the corresponding physical address has been used for remapping. The remapping sub-region ID field may be set to a value of the sub-region ID that is remapped to the corresponding physical address.

The bit field may include a first field which is a flag field, a second field which is a remapping sub-region ID field, a third field which is a page index field, a fourth field which is a cache line index field, and a fifth field which is a byte offset field. The third field may include a sub-region ID field indicating a value corresponding to a default sub-memory region allocated to a page when the bit field is generated, and a memory node ID field for identifying a memory node corresponding to the page. For example, when the number of the plurality of memory nodes is 2 ⁿ, the memory node ID field may be composed of n bits, and n may be a natural number. When the number of a plurality of sub-memory regions of the first memory node is 2^{m}, the memory node ID field may be composed of m bits, and m may be a natural number.

Pages (e.g., cache lines) within the first array 411b may be mapped based on the bit field of the Table 1.

According to an example, when cache lines for the memory node 0 (e.g., cache lines referring to node groups including the memory node 0) are combined among the cache lines within the first array 411b, a second array 420b may logically be generated as a result of the combination. A memory region of the memory node 0 may be divided into memory regions for each of the plurality of sub-memory regions.

In the second array 420b, the memory Node 0_0 may be a region in which a sub-region ID is 0 and a memory node ID is connected to 0. The region of memory Node 0_0 may be exclusively used by an application executed by a core of the memory node 0.

In the second array 420b, the memory Node 0_1 may be a region in which a sub-region ID is 1 and a memory node ID is connected to 0. The region of memory Node 0_1 may be used by an application executed by a core of the memory node 0 or a core of the memory node 1 (that is, a core of the group {0, 1}).

In the second array 420b, the memory Node 0_2 may be a region in which a sub-region ID is 2 and a memory node ID is connected to 0. The region of memory Node 0_2 may be used by an application executed by a core of the memory node 0, a core of the memory node 1, a core of the memory node 2, or a core of the memory node 3 (that is, a core of the group {0, 1, 2, 3}).

In the second array 420b, the memory Node 0_3 may be a region in which a sub-region ID is 3 and a memory node ID is connected to 0. The region of memory Node 0_3 may be used by an application executed by one of a core of the memory node 0 to a core of the memory node 15 (that is, a core of the group {0, ..., 15}).

FIG. 4C illustrates an example of a partitioned first sub-memory region present within a dynamic hashed region.

According to an example, when pages for a first sub-memory region (e.g., a memory region in which a sub-region ID is 0) among the pages in the first array 411b are combined, a third array 430 may logically be generated as a result of the combination. The third array 430 may be divided into pages for the plurality of memory nodes. A page may consist of cache lines of the same memory node.

FIG. 4D illustrates an example of a partitioned second sub-memory region present within a dynamic hashed region.

According to an example, when pages for a second sub-memory region (e.g., a memory region in which a sub-region ID is 1) among the pages in the first array 411b are combined, a fourth array 431 may logically be generated as a result of the combination. A page of the fourth array 431 may consist of cache lines of a group of memory nodes corresponding to the corresponding page. For example, a page of sub-region 1_{0, 1} may consist of a cache line of the memory node 0 and a cache line of the memory node 1. For example, a page of sub-region 1_{2, 3} may consist of a cache line of the memory node 2 and a cache line of the memory node 3.

FIG. 4E illustrates an example of a partitioned third sub-memory region present within a dynamic hashed region.

According to an example, when pages for a third sub-memory region (e.g., a memory region in which a sub-region ID is 2) among the pages in the first array 411b are combined, a fifth array 432 may logically be generated as a result of the combination. A page of the fifth array 432 may consist of cache lines of a group of memory nodes corresponding to the corresponding page. For example, a page in sub-region 2_{0, 1, 2, 3} may consist of a cache line of the memory node 0, a cache line of the memory node 1, a cache line of the memory node 2, and a cache line of the memory node 3. For example, a page in sub-region 2_{4, 5, 6, 7} may consist of a cache line of the memory node 4, a cache line of the memory node 5, a cache line of the memory node 6, and a cache line of the memory node 7.

FIG. 4F illustrates an example of a partitioned fourth sub-memory region present within a dynamic hashed region.

According to an example, when pages for a fourth sub-memory region (e.g., a memory region in which a sub-region ID is 3) among the pages in the first array 411b are combined, a sixth array 433 may logically be generated as a result of the combination. A page of the sixth array 433 may consist of cache lines of a group of memory nodes corresponding to the corresponding page. For example, a page of sub-region 3_{0, ..., 15} may consist of a cache line of the memory node 0 to a cache line of the memory node 15.

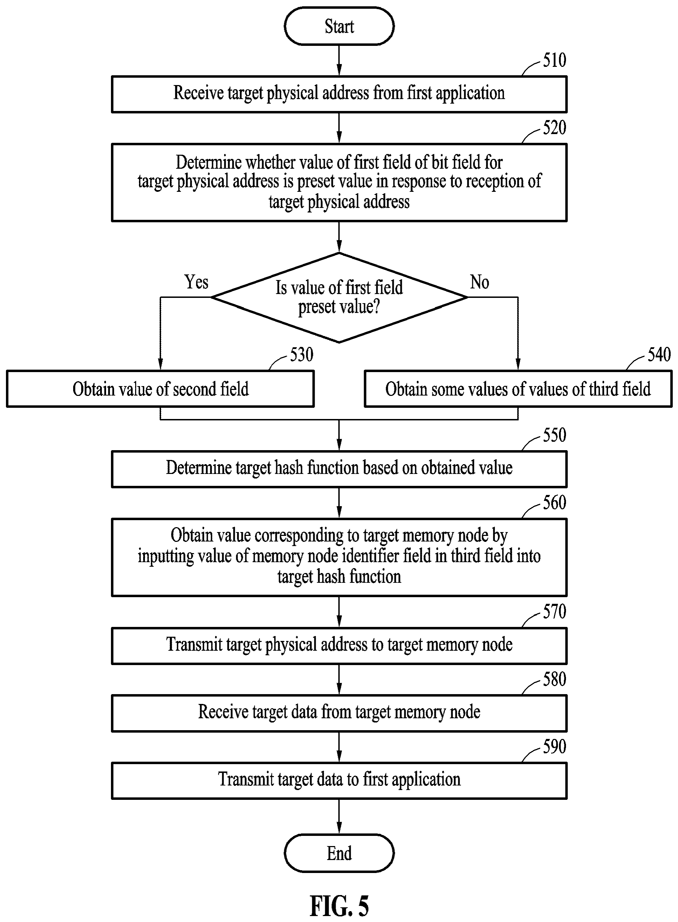

FIG. 5 illustrates an example of a data transmission method. Operations 510 to 590 of FIG. 5 may be performed in the shown order and manner. However, the order of one or more of the operations may be changed, one or more of the operations may be omitted, two or more of the operations may be performed in parallel or simultaneously, and/or other operations may be additionally performed without departing from the scope of the example embodiments described herein.

A data transmission method, performed by an electronic device (e.g., the electronic device 100 of FIG. 1 or the electronic device 200 of FIG. 2), to which the method of partitioning (or mapping) a dynamic hashed region of a memory described above with reference to FIGS. 4A to 4F is applied, may include operations 510 to 590.

In operation 510, the electronic device may receive a target physical address of a first application. For example, the first application may be an application executed by a core associated with a first memory node (e.g., the first memory node 210 of FIG. 2 or the first memory node 310). The first application may transmit the target physical address to the electronic device to load (or obtain) data stored at the target physical address.

In operation 520, the electronic device may determine whether a value of a first field of a bit field for the target physical address is a preset value in response to the reception of the target physical address. The first field may be an upper bit of a bit field. For example, the first field may be the flag field described above with reference to FIG. 4B. The first field may be set to 0 in an initial state where a corresponding physical address has not yet been used for remapping, and may be set to 1 when the corresponding physical address has been used for remapping.

For example, operation 530 may be performed when the value of the first field is 1, the preset value, and operation 540 may be performed when the value of the first field is not 1, the preset value.

In operation 530, the electronic device may obtain a value of a second field when the value of the first field is the preset value. The second field may be, for example, a remapping sub-region ID field described above with reference to FIG. 4B.

In operation 540, the electronic device may obtain some values of values of a third field when the value of the first field is not the preset value. For example, the third field may be the page index field described above with reference to FIG. 4B, and some of the values of the third field may be values of the sub-region ID field. For example, the values of the sub-region **ID** field may be values from the (m+11)-th bit to the 12th bit of the bit field.

In operation 550, the electronic device may determine a target hash function based on the obtained value. For example, for the values in the sub-region ID field, different hash functions may be defined. For example, when the value of the sub-region ID field is 0, a first hash function may be determined, and when the value of the sub-region ID field is 1, a second hash function may be determined.

In operation 560, the electronic device may obtain a value corresponding to a target memory node by inputting a value of a memory node ID field within the third field into the target hash function. For example, the memory node ID field within the third field may be the memory node ID field described above with reference to FIG. 4B. A value corresponding to the target memory node obtained by the target hash function may be a memory node ID. The target memory node corresponding to a target physical address may be determined by the memory node ID.

According to an example, a length of bits obtained from the memory node ID field may vary depending on the value of the sub-region ID field or the target hash function. For example, when the value of the sub-region ID field is 0, a (m + n + 11)-th bit to a (m + 12)-th bit of the bit field may be obtained from the memory node ID field. For example, when the value of the sub-region ID field is 1, a (m + n + 10)-th bit to the (m + 12)-th bit of the bit field may be obtained from the memory node ID field. For example, when the value of the sub-region ID field is 2, a (m + n + 9)-th bit to the (m + 12)-th bit of the bit field may be obtained from the memory node ID field. For example, when the value of the sub-region ID field is 3, a (m + n + 8)-th bit to the (m + 12)-th bit of the bit field may be obtained from the memory node ID field.

According to an example, bits within a fourth field may be further input into the target hash function. For example, the fourth field may be the cache line index field described above with reference to FIG. 4B. The bits in the fourth field may be used to identify one memory node within an identified group ID.

According to an example, a method of obtaining a value corresponding to a target memory node based on each hash function will be described for a case where the number of the plurality of memory nodes is 4 (i.e., n = 2) and the number of the plurality of sub-memory regions is 16 (i.e., m = 4).

For sub-region 0, a 17th bit to a 14th bit of the bit field may be obtained from the memory node ID field as addr[17:14]. When the number of bits obtained is 4, the plurality of memory nodes may be identified without overlapping using a hash function.

For sub-region 1, a 16th bit to the 14th bit of the bit field may be obtained from the memory node ID field as addr[16:14], and a 6th bit of the bit field may be obtained from the cache line index field as addr[6]. A group ID including two memory nodes may be identified based on addr[16:14], and one target memory node may be identified within the group ID based on addr[6].

For sub-region 2, a 15th bit to the 14th bit of the bit field may be obtained from the memory node ID field as addr[15:14], and a 7th bit to the 6th bit of the bit field may be obtained from the cache line index field as addr[7:6]. A group ID including four memory nodes may be identified based on addr[15:14], and one target memory node may be identified within the group ID based on addr[7:6].

For sub-region 3, a 9th bit to the 6th bit of the bit field may be obtained from the cache line index field as addr[9:6]. Since the number of bits obtained is 4, the plurality of memory nodes may be identified without overlapping using a hash function.

In operation 570, the electronic device may transmit the target physical address to the target memory node.

In operation 580, the electronic device may receive target data from the target memory node. For example, the target data may be data stored in a memory region corresponding to the target physical address.

In operation 590, the electronic device may transmit the target data to a first application.

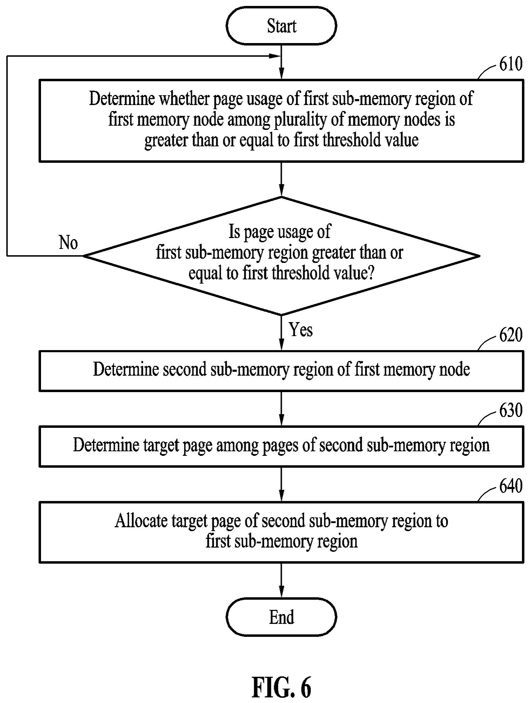

FIG. 6 illustrates an example of a memory management method. Operations 610 to 640 of FIG. 6 may be performed in the shown order and manner. However, the order of one or more of the operations may be changed, one or more of the operations may be omitted, two or more of the operations may be performed in parallel or simultaneously, and/or other operations may be additionally performed without departing from the scope of the example embodiments described herein.

When all available pages of a first sub-memory region are used by the first application that exclusively uses the first sub-memory region of the first memory node, the first application may no longer use the pages of the first memory node and may have to use pages of a second memory node (e.g., pages of a second sub-memory region of the second memory node). When the first application is executed by a first core of the first memory node, the first application using the pages of the second memory node may cause a delay in data processing. Accordingly, a method of reallocating a memory region allocated to another sub-memory region among the memory regions of the first memory node to the first sub-memory region may be considered.

A memory management method, performed by an electronic device (e.g., the electronic device 100 of FIG. 1 or the electronic device 200 of FIG. 2), to which the method of partitioning (or mapping) a dynamic hashed region of a memory described above with reference to FIGS. 4A to 4F is applied, may include operations 610 to 640.

In operation 610, the electronic device may determine a page usage of the first sub-memory region (e.g., a memory region in which a sub-region ID is 0) of the first memory node among the plurality of memory nodes is greater than or equal to a first threshold value (e.g., 90%). When the page usage of the first sub-memory region is greater than or equal to the first threshold, operation 620 may be performed.

According to an example, each of the plurality of memory nodes may include a memory controller (e.g., the first core 211 of FIG. 2) that monitors a page usage of a sub-memory region of a corresponding memory node. The memory controller may be implemented as hardware including processing circuitry. The memory controller may determine whether a page usage of a first sub-memory region of a first memory node is greater than or equal to the first threshold. When the page usage of the first sub-memory region of the first memory node is greater than or equal to the first threshold, the memory controller generates an interrupt to an address remapping module to be described below. The memory controller receives Acknowledgement (ACK) for the interrupt from the address remapping module.

In operation 620, the electronic device may determine a second sub-memory region (e.g., a memory region in which a sub-region ID is 1) of the first memory node. The electronic device may determine the second sub-memory region based on page usages of a plurality of sub-memory regions of the first memory node. For example, a sub-memory region with a lowest page usage may be determined as the second sub-memory region. The memory controller may determine the second sub-memory region of the first memory node.

According to an example, the electronic device may determine the number of pages to be reallocated from the second sub-memory region to the first memory region.

The memory controller transmits information about the first sub-memory region which receives the pages, the second sub-memory region which transfers the pages, and the number of pages to be transferred to the address remapping module.

In operation 630, the electronic device may determine a target page among the pages of the second sub-memory region. The electronic device may allocate one or more pages of the second sub-memory region to the first sub-memory region according to page transfer rules between the first sub-memory region and the second sub-memory region. For example, the electronic device may associate a target physical address of the target page with a first sub-region ID corresponding to the first sub-memory region.

To easily describe the page transfer rules, it is assumed that the number of memory nodes belonging to the sub-region ID is 2^{ID} and the number of groups included in each sub-region ID is SR_ID. At this time, a pattern that results by expressing the sub-region ID and group ID in tuple form for each sub-memory region may be as follows.
- Sub-region 0 has (0,0), (0,1), ..., (0,SR_0), and a step until the same resulting tuple is 4 KB × M regions × SR_0 group KB.
- Sub-region 1 has (1,0), (1,1), ..., (1,SR_1), and a step until the same resulting tuple is 4 KB × M regions × SR_1 groups KB.
- Sub-region 2 has (2,0), (2,1), ..., (2,SR_2), and a step until the same resulting tuple is 4 KB × M regions × SR_2 groups KB.
- ...
- Sub-region M has (M,0), (M,1), ..., (M,SR_M), and a step until the same tuple resulting is 4 KB × M regions × SR_M group KB.

Considering the above pattern, the rules for reallocating pages of a sub-memory region to another sub-memory region may be as follows. Here, it is expressed using a memory node ID included in a corresponding group instead of (SR_ID, SR group ID). For example, when SR group ID 0 of sub-region 1 (SR 1) includes memory nodes 0 and 1, it is expressed as (SR1, {0, 1}).
a) For SR 0,
   i) SR 0 <-> SR 1: {(0,{a}), (0,{b})} <-> 2 × (1,{a,b})
   ii) SR 0 <-> SR 2: {(0,{a}), (0,{b}), (0,{c}), (0,{d})} <-> 4 × (2,{a,b,c,d})
   iii) ...
b) For SR 1,
   i) SR 1 <-> SR 2: {(1,{a,b}), (1,{c,d}) <-> 2 × (2, {a,b,c,d})
   ii) ...
c) For SR 2,
   SR 2 <-> SR 3: {(2,{a,b,c,d}), (2,{d,e,f,g}), (2,{h,i,j,k}), (2,{l,m,o,p})} <-> 4 × (3,{a,b,...,p})

According to the above pattern, page transfer between sub-memory regions is possible through inductive inference even when the number of sub-memory regions increases to m.

The electronic device may determine an unused page among the pages of the second sub-memory region as a target page based on a remapping policy and an available range for each sub-memory region set for dynamic remapping.

According to an example, the electronic device may determine one or more pages of the second sub-memory region to be allocated to the first sub-memory region using the address remapping module. The address remapping module may be implemented as software or hardware including processing circuitry.

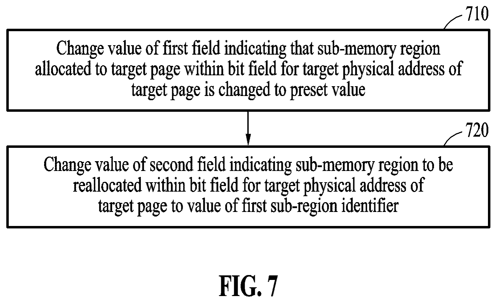

In operation 640, the electronic device may allocate the target page of the second sub-memory region to the first sub-memory region. For example, the address remapping module may allocate one or more target pages of the second sub-memory region to the first sub-memory region. An example of the method of allocating the target page of the second sub-memory region to the first sub-memory region will be described in detail below with reference to FIG. 7.

The electronic device may transmit information about the target page to the memory controller of the first memory node and receive ACK from the memory controller. The memory controller of the first memory node may update the size and the page usage of the sub-memory region.

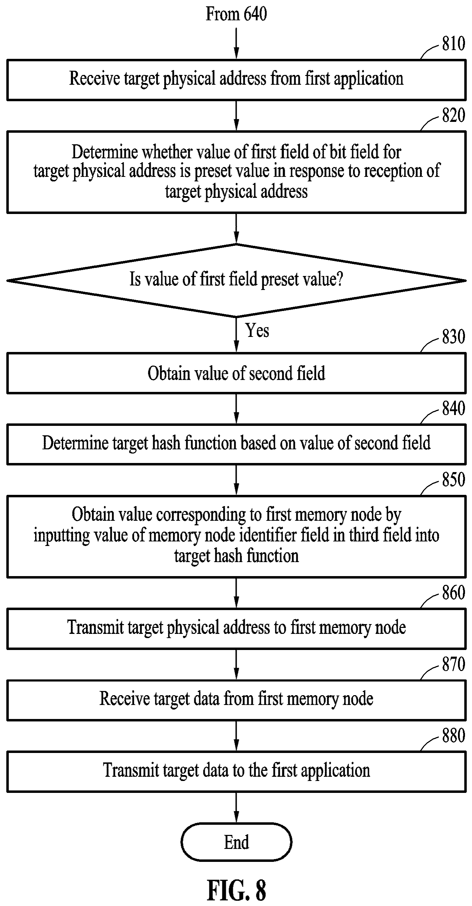

An example of a method of processing an access request for a physical address of a target page reallocated to the first sub-memory region when the access request is received from an application will be described in detail below with reference to FIG. 8.

FIG. 7 illustrates an example of a method of allocating a target page of a second sub-memory region to a first sub-memory region. Operations 710 to 720 of FIG. 7 may be performed in the shown order and manner. However, the order of one or more of the operations may be changed, one or more of the operations may be omitted, two or more of the operations may be performed in parallel or simultaneously, and/or other operations may be additionally performed without departing from the scope of the example embodiments described herein.

According to an example, operation 640 described above with reference to FIG. 6 may include operations 710 and 720 of FIG. 7.

In operation 710, an electronic device (e.g., the electronic device 100 of FIG. 1 or the electronic device 200 of FIG. 2) may change a value of a first field in a bit field for a target physical address of a target page to a preset value. For example, the first field may be the flag field described above with reference to FIG. 4B. For example, the preset value may be 1. The bit field for the target physical address of the target page may be generated by partitioning the memory or by booting the electronic device. A value of the first field of an initial bit field may be 0.

In operation 720, the electronic device may change a value of a second field within a bit field for the target physical address of the target page to a value of a first sub-region ID (e.g., "0" indicating sub-region 0). The second field may be, for example, a remapping sub-region ID field described above with reference to FIG. 4B. A value of the second field of the initial bit field may not be specified.

FIG. 8 illustrates an example of a method of transmitting data of a target page allocated to a first sub-memory region to a first application. Operations 810 to 880 of FIG. 8 may be performed in the shown order and manner. However, the order of one or more of the operations may be changed, one or more of the operations may be omitted, two or more of the operations may be performed in parallel or simultaneously, and/or other operations may be additionally performed without departing from the scope of the example embodiments described herein.

According to an example, operations 810 to 880 of FIG. 8 may be performed after operation 640 described above with reference to FIG. 6 is performed.

In operation 810, an electronic device (e.g., the electronic device 100 of FIG. 1 or the electronic device 200 of FIG. 2) may receive a target physical address from a first application. For example, the first application may be an application executed by a core associated with a first memory node (e.g., the first memory node 210 of FIG. 2 or the first memory node 310). The first application may transmit the target physical address to the electronic device to load (or obtain) data stored at the target physical address.

In operation 820, the electronic device may determine whether a value of a first field of a bit field for the target physical address is a preset value in response to the reception of the target physical address. For example, the first field may be the flag field described above with reference to FIG. 4B. Since the value of the first field of the bit field for the target physical address is changed to "1" by operation 710 described above with reference to FIG. 7, it may be determined that the value of the first field is the preset value.

In operation 830, the electronic device may obtain a value of a second field of a bit field. The second field may be, for example, a remapping sub-region ID field described above with reference to FIG. 4B. Since the value of the second field of the bit field for the target physical address is changed to the value of the first sub-region ID (e.g., "0" indicating sub-region 0) by operation 720 described above with reference to FIG. 7, the obtained value of the second field may be the value of the first sub-region ID.

In operation 840, the electronic device may determine a target hash function based on the value of the second field. For example, a first hash function corresponding to the value of the first sub-region ID (e.g., "0") may be determined as the target hash function.

In operation 850, the electronic device may obtain a value corresponding to a first memory node by inputting a value of a memory node ID field within the third field into the target hash function.

In operation 860, the electronic device may transmit the target physical address to the first memory node.

In operation 870, the electronic device may receive target data from the first memory node. For example, the target data may be data stored in a memory region corresponding to the target physical address.

In operation 880, the electronic device may transmit the target data to the first application.

The electronic devices, communicators, processors, memories, memory nodes, first cores, first memories, electronic device 100, communicator 110, processor 120, memory 130, electronic device 200, memory nodes 210, 220, and 230, first core 211, first memory 212, and memory nodes 310, 320, and 330 described herein, including descriptions with respect to respect to FIGS. 1-8, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1-8 that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the present invention is specified by the enclosed claims.

## Claims

1. A processor-implemented method comprising:
determining whether a page usage of a first sub-memory region of a first memory node among a plurality of memory nodes of a memory is greater than or equal to a first threshold value;
determining a second sub-memory region of the first memory node in response to the page usage of the first sub-memory region being greater than or equal to the first threshold value;
determining a target page among pages of the determined second sub-memory region; and
allocating the determined target page of the second sub-memory region to the first sub-memory region.

2. The method of claim 1, wherein the determining of the second sub-memory region of the first memory node in response to the page usage of the first sub-memory region being greater than or equal to the first threshold value comprises determining the second sub-memory region based on page usages of a plurality of sub-memory regions of the first memory node.

3. The method of claim 1 or 2, wherein the allocating of the target page of the second sub-memory region to the first sub-memory region comprises associating a target physical address of the target page with a first sub-region identifier corresponding to the first sub-memory region.

4. The method of claim 3, wherein the allocating of the target page of the second sub-memory region to the first sub-memory region comprises:
changing a value of a first field indicating that a sub-memory region allocated to the target page within a bit field for the target physical address of the target page is changed to a preset value; and
changing a value of a second field indicating a sub-memory region to be reallocated within the bit field for the target physical address of the target page to a value of the first sub-region identifier.

5. The method of claim 4, wherein the bit field for the target physical address of the target page is generated by either one or both of partitioning the memory and booting the electronic device, or
wherein the bit field comprises the first field, the second field, a third field indicating an index of the target page, a fourth field indicating an index of a cache line within the target page, and a fifth field for an offset of the bit field.

6. The method of claim 5, wherein the third field comprises:
a sub-region identifier field in which a value corresponding to a default sub-memory region allocated to the target page is shown at the time of generating the bit field; and
a memory node identifier field for identifying a memory node corresponding to the target page.

7. The method of claim 6, wherein in response to a number of the plurality of memory nodes being 2ⁿ, the memory node identifier field is composed of n bits, and the n is a natural number, or
wherein in response to a number of a plurality of sub-memory regions of the first memory node being 2^{m}, the sub-region identifier field is composed of m bits, and the m is a natural number, or
further comprising receiving the target physical address from a first application executed by the electronic device, determining whether the value of the first field of the bit field for the target physical address is the preset value in response to the reception of the target physical address, obtaining the value of the second field in response to the value of the first field being the preset value, determining a target hash function based on the value of the second field, obtaining a value corresponding to the first memory node by inputting a value of the memory node identifier field into the target hash function, transmitting the target physical address to the first memory node, receiving target data from the first memory node, and transmitting the target data to the first application.

8. A non-transitory computer-readable storage medium storing code that, when executed by one or more processors, configures the one or more processors to perform the method of one of claims 1 to 7.

9. An electronic device comprising:
a memory comprising a plurality of memory nodes; and
one or more processors configured to:
determine whether a page usage of a first sub-memory region of a first memory node among the plurality of memory nodes is greater than or equal to a first threshold value;
determine a second sub-memory region of the first memory node in response to the page usage of the first sub-memory region being greater than or equal to the first threshold value;
determine a target page among pages of the second sub-memory region; and
allocate the target page of the second sub-memory region to the first sub-memory region.

10. The electronic device of claim 9, wherein
the one or more processors comprise a first core associated with the first memory node, and
the first core is configured to:
perform the determining of whether the page usage of the first sub-memory region is greater than or equal to the first threshold value; and
perform the determining of the second sub-memory region of the first memory node in response to the page usage of the first sub-memory region being greater than or equal to the first threshold value.

11. The electronic device of claim 9 or 10, wherein, for the allocating of the target page, the one or more processors are configured to associate a target physical address of the target page with a first sub-region identifier corresponding to the first sub-memory region.

12. The electronic device of claim 11, wherein, for the allocating of the target page, the one or more processors are configured to:
change a value of a first field indicating that a sub-memory region allocated to the target page within a bit field for the target physical address of the target page is changed to a preset value; and
change a value of a second field indicating a sub-memory region to be reallocated within the bit field for the target physical address of the target page to a value of the first sub-region identifier.

13. The electronic device of claim 12, wherein the bit field for the target physical address of the target page is generated by either one or both partitioning the memory and booting the electronic device, or
wherein the bit field comprises the first field, the second field, a third field indicating an index of the target page, a fourth field indicating an index of a cache line within the target page, and a fifth field for an offset of the bit field.

14. The electronic device of claim 13, wherein the third field comprises:
a sub-region identifier field in which a value corresponding to a default sub-memory region allocated to the target page is shown at the time of generating the bit field, and
a memory node identifier field for identifying a memory node corresponding to the target page.

15. The electronic device of claim 14, wherein in response to a number of the plurality of memory nodes being 2ⁿ, the memory node identifier field is composed of n bits, and the n is a natural number, or
wherein in response to a number of a plurality of sub-memory regions of the first memory node being 2^{m}, the sub-region identifier field is composed of m bits, and the m is a natural number.
